# EUROPEAN PATENT APPLICATION

(11) **EP 2 469 948 A1**
(43) Date of publication of application: **27.06.2012**
(21) Application number: 09848417.3
(22) Date of filing: 24.12.2009
(51) Int. Cl.: H04W 72/04

(54) **CARRIER AGGREGATION METHOD AND DEVICE FOR LONG TERM EVOLUTION SYSTEM**

(30) Priority: 18.08.2009 CN 200910166182
(71) Applicant: ZTE Corporation, Shenzhen, Guangdong 518057 (CN)
(72) Inventor: WEI, Wei, Guangdong 518057 (CN)
(74) Representative: Richter Werdermann Gerbaulet Hofmann
(86) International application number: PCT/CN2009/076013
(87) International publication number: WO 2011/020276

(57) **Abstract**

The disclosure provides a carrier aggregation method and a carrier aggregation device for a Long Term Evolution (LTE) system. The method comprises the following steps: forming a primary aggregation carrier according to bandwidth capabilities of all User Terminals (UTs) which need to be supported in a wireless communication network; determining whether the primary aggregation carrier meets a bandwidth capability requirement of a UT being served; forming a secondary aggregation carrier according to carrier resources other than the primary aggregation carrier when the primary aggregation carrier does not meet the bandwidth capability requirement of the UT being served; aggregating the primary aggregation carrier and the secondary aggregation carrier to obtain a new aggregation carrier, and setting the new aggregation carrier for meeting the bandwidth capability requirement of the UT being served. The disclosure effectively resolves the problems of high scheduling complexity and low scheduling flexibility of a Base Station (BS) which requires entire backward compatibility for all the carrier resources when asymmetrical carrier aggregation is supported, so that the BS may schedule the carrier resources more flexibly, thereby reducing the scheduling complexity.

## Description

### TECHNICAL FIELD

The disclosure relates to the field of communications, particularly to a carrier aggregation method and a carrier aggregation device for Long Term Evolution (LTE) system.

### BACKGROUND

In broadband wireless communication network of next generation, it has become a key factor for improving User Terminal (UT) throughput and average UT throughput among cells about how to support greater bandwidth under the bandwidth of existing wireless communication system.

At present, the LET technology of the third Generation Partnership Project (3GPP) proposes to apply a carrier aggregation mode to effectively support greater bandwidth in the existing wireless communication system, so as to meet requirements of throughput, peak rate and other indexes in new generation wireless standard. Carrier aggregation is a key technology for supporting greater bandwidth in future wireless communication system. A carrier with greater bandwidth is formed by aggregating different carriers, so as to support a UT with more capability, such as a bandwidth exceeding 100MHz in LTE-Advanced, on the aggregated bandwidth.

The inventor found that an asymmetrical service existing between an uplink and downlink in the wireless communication system will result in the uplink carrier and downlink carrier to be asymmetric when carriers are aggregated. If an entire backward compatibility is required for all the carrier resources in the wireless communication network, there would exist problems of high scheduling complexity and low scheduling flexibility for a Base Station (BS) which requires an entire backward compatibility for all the carrier resources when asymmetrical carrier aggregation is supported.

### SUMMARY

The disclosure is intended to provide a carrier aggregation method for a LTE system, so as to be able to solve the problems of high scheduling complexity and low scheduling flexibility of a BS which requires an entire backward compatibility for all the carrier resources during the carrier aggregation when asymmetrical carrier aggregation is supported.

In the embodiments of the disclosure, a carrier aggregation method for the LTE system is provided, wherein the carrier aggregation method comprises the following steps: forming a primary aggregation carrier according to bandwidth capabilities of all UTs that needed to be supported in a wireless communication network; determining whether the primary aggregation carrier meets a bandwidth capability requirement of a UT being served; forming a secondary aggregation carrier according to carrier resources other than the primary aggregation carrier when the primary aggregation carrier does not meet the bandwidth capability requirement of the UT being served; aggregating the primary aggregation carrier and the secondary aggregation carrier to obtain a new aggregation carrier, and setting the new aggregation carrier for meeting the bandwidth capability requirement of the UT being served.

Preferably, the carrier aggregation method may further comprise: setting the primary aggregation carrier for meeting the bandwidth capability requirement of the UT being served when the primary aggregation carrier meets the bandwidth capability requirement of the UT being served.

Preferably, in the carrier aggregation method above, the method of forming the primary aggregation carrier according to the bandwidth capabilities of all the UTs that needed to be supported in a wireless communication network may specifically comprise: determines the bandwidth capabilities of all the UTs that needed to be supported; determines a bandwidth size and a bandwidth amount needed to be backwards compatible according to the bandwidth capabilities of all the UTs that needed to be supported; selects carrier resources which are entirely backwards compatible with the bandwidth capabilities of all the UTs that needed to be supported according to the bandwidth size and bandwidth amount, and forms the primary aggregation carrier.

Preferably, in the carrier aggregation method above, the method may further comprise: performing unified scheduling for the primary aggregation carrier and other carrier resources.

Preferably, in the carrier aggregation method above, the method of forming the primary aggregation carrier according to the bandwidth capabilities of all the UTs that needed to be supported in the wireless communication network may specifically comprise: determines the bandwidth capabilities of all the UTs that needed to be supported; groups the bandwidth capabilities of all the UTs that needed to be supported; determines a bandwidth size and a bandwidth amount needed to be backwards compatible in each group; selects carrier resources which are entirely backwards compatible with the bandwidth capabilities of all the UTs that needed to be supported according to the bandwidth size and bandwidth amount, and forms the primary aggregation carrier of the each group.

Preferably, in the carrier aggregation method above, the method of forming the primary aggregation carrier according to the bandwidth capabilities of all the UTs that needed to be supported in the wireless communication network may further comprise: regrouping the bandwidth capabilities of all the UTs that needed to be supported according to current state of the wireless communication network; determining a bandwidth size and a bandwidth amount needed to be backwards compatible in each regrouped group; selecting carrier resources which are entirely backwards compatible with the bandwidth capabilities of all the UTs that needed to be supported according to the bandwidth size and bandwidth amount, and forming a primary aggregation carrier of the each regrouped group.

Preferably, in the carrier aggregation method above, unified scheduling may be performed for the carrier resources of each group.

Preferably, in the carrier aggregation method above, separate scheduling may be performed for the carrier resources of each group.

Preferably, in the carrier aggregation method above, unified scheduling may be performed for the secondary aggregation carrier of each group.

Preferably, in the carrier aggregation method above, the method of forming the secondary aggregation carrier according to the carrier resources other than the primary aggregation carrier may specifically comprise: selects carrier resources which are entirely backwards compatible with a bandwidth capability of a UT being served, and forms the secondary aggregation carrier.

In another aspect, in the embodiment of the disclosure, a carrier aggregation device for a LTE system is futher provided, wherein the device comprises: a primary aggregation carrier module, which is configured to form a primary aggregation carrier according to bandwidth capabilities of all UTs that needed to be supported in a wireless communication network; a determination module, which is configured to determinine whether the primary aggregation carrier meets a bandwidth capability requirement of a UT being served; a secondary aggregation carrier module, which is configured to form a secondary aggregation carrier according to carrier resources other than the primary aggregation carrier when the primary aggregation carrier does not meet the bandwidth capability requirement of the UT being served; a setting module, which is configured to aggregate the primary aggregation carrier and the secondary aggregation carrier to obtain a new aggregation carrier, and set the new aggregation carrier for meeting the bandwidth capability requirement of the UT being served.

Preferably, the carrier aggregation device may further comprise: a grouping module, which is configured to group the bandwidth capabilities of all the UTs that needed to be supported.

In the embodiment above, the BS firstly forms a primary aggregation carrier according to the bandwidth capabilities of all the UTs that needed to be supported in the wireless communication network; when the primary aggregation carrier does not meet the bandwidth capability requirement of the UT being served, for example, the resources of the primary aggregation carrier have low spectrum efficiency when utilized by the bandwidth capability of the UT being served, then the BS performs an aggregation for UTs of different types in the wireless communication network according to the carrier resources other than the primary aggregation carrier to form secondary aggregation carrier which is not entirely backwards compatible with the bandwidth capabilities of all the UTs. The BS aggregates the primary aggregation carrier and the secondary aggregation carrier to obtain a new aggregation carrier for supporting UT with greater bandwidth capability. By the primary-secondary aggregation carrier mode, the embodiments effectively resolves the problems of high scheduling complexity and low scheduling flexibility of a BS which requires entire backward compatibility for all the carrier resources when asymmetrical carrier aggregation is supported, so that the BS may schedule the carrier resources more flexibly, thereby reducing the scheduling complexity.

### BRIEF DESCRIPTION OF THE DRAWINGS

Fig. 1 is a flow chart showing a carrier aggregation method according to a first embodiment of the disclosure;
Fig. 2 is a flow chart showing a carrier aggregation method according to a second embodiment of the disclosure;
Fig. 3 is a structural diagram showing a carrier aggregation device according to a third embodiment of the disclosure.

### DETAILED DESCRIPTION

Hereinafter, the disclosure will be illustrated in details in conjunction with the embodiments and the accompanying drawings.

### The first embodiment

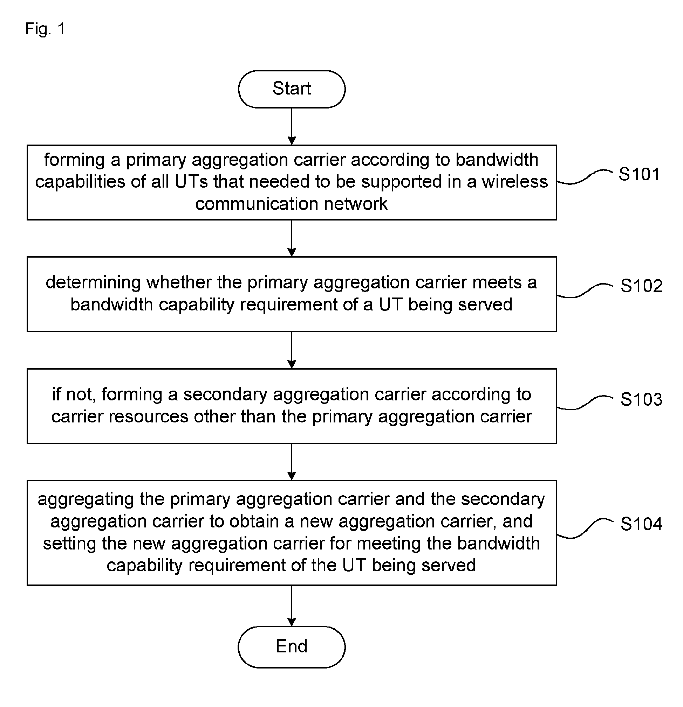

Fig. 1 is a flow chart showing a carrier aggregation method according to the first embodiment of the disclosure, wherein the flow comprises the following steps:
Step S101: forming a primary aggregation carrier according to bandwidth capabilities of all UTs that needed to be supported in a wireless communication network;
Step S102: determining whether the primary aggregation carrier meets a bandwidth capability requirement of a UT being served;
Step S103: forming a secondary aggregation carrier according to carrier resources other than the primary aggregation carrier when the primary aggregation carrier does not meet the bandwidth capability requirement of the UT being served;
Step S104: aggregating the primary aggregation carrier and the secondary aggregation carrier to generate a new aggregation carrier, and setting the new aggregation carrier for meeting the bandwidth capability requirement of the UT being served.

In this embodiment, a BS firstly forms the primary aggregation carrier according to the bandwidth capabilities of all the UTs that needed to be supported in the wireless communication network; when the primary aggregation carrier does not meet the bandwidth capability requirement of the UT being served, for example, the resources of the primary aggregation carrier which is utilized by the bandwidth capability of the UT being served has a low spectrum efficiency, then the BS performs an aggregation for the UTs of different types in the wireless communication network according to the carrier resources other than the primary aggregation carrier to form the secondary aggregation carrier which is not entirely backwards compatible with the bandwidth capabilities of all the UTs; and, the BS aggregates the primary aggregation carrier and the secondary aggregation carrier to obtain the new aggregation carrier for supporting the UT with greater bandwidth capability. By the primary-secondary aggregation carrier mode, this embodiment effectively resolves the problems of high scheduling complexity and low scheduling flexibility of a BS which requires an entire backward compatibility for all the carrier resources when asymmetrical carrier aggregation is supported, so that the BS may schedule the carrier resources more flexibly, thereby reducing the scheduling complexity.

Preferably, the carrier aggregation method above further comprises: setting the primary aggregation carrier for meeting the bandwidth capability requirement of the UT being served when the primary aggregation carrier meets the bandwidth capability requirement of the UT being served.

In this embodiment, if the primary aggregation carrier meets the bandwidth capability requirement of the UT being served, the primary aggregation carrier is directly selected to serve the UT being served. In this way, there is no need to schedule other carrier resources when the primary aggregation carrier is sufficient to meet the bandwidth capability requirement of the UT being served, and the primary carrier is used independently to support asymmetrical carrier aggregation, thereby simplifying the resource scheduling performed by the BS to carriers.

### The second embodiment

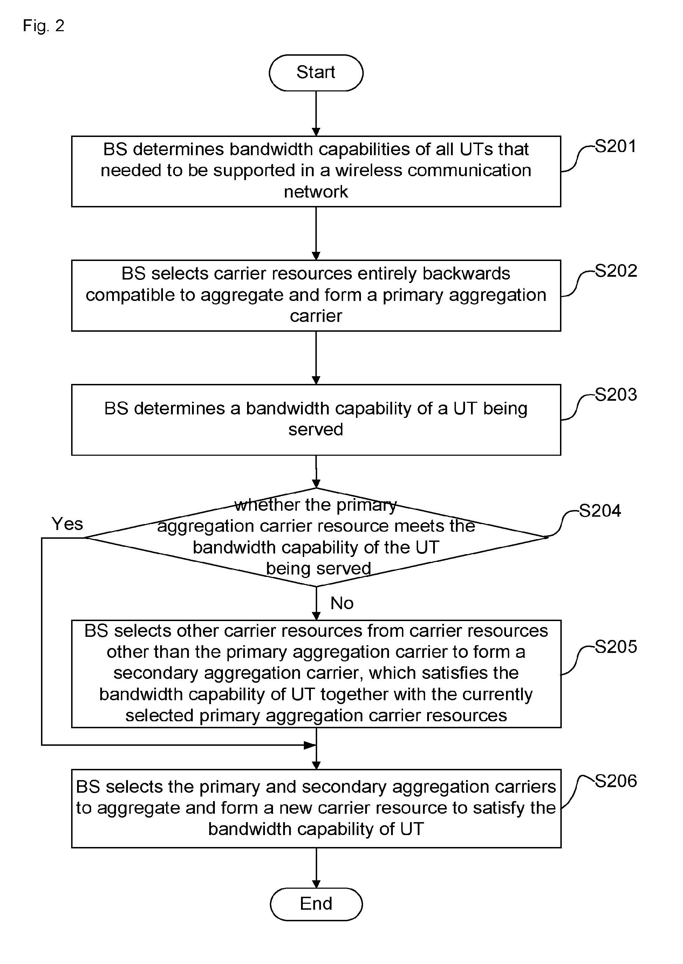

Fig. 2 is a flow chart showing a carrier aggregation method according to the second embodiment of the disclosure, wherein the flow comprises the following steps:
Step S201: a BS determines bandwidth capabilities of all UTs that needed to be supported in a wireless communication network;
Step S202: the BS selects carrier resources which are entirely backwards compatible to aggregate and form a primary aggregation carrier;
Step S203: the BS determines bandwidth capability of a UT being served;
Step S204: the BS selects carrier resources from the primary aggregation carrier; if the primary aggregation carrier resources does not meet the bandwidth capability requirement of the UT being served, step S205 is to be executed; otherwise, step S206 is to be executed;
Step S205: the BS selects other carrier resources from carrier resources other than the primary aggregation carrier to form a secondary aggregation carrier, wherein both the secondary aggregation carrier and the currently selected primary aggregation carrier resources satisfy the bandwidth capability of the UT;
Step S206: the BS selects the primary and secondary aggregation carriers to aggregate and form new carrier resources to satisfy the bandwidth capability of the UT; wherein the secondary aggregation carrier component in this step is equivalent to zero when the primary aggregation carrier resource meets the bandwidth capability requirement of the UT being served, that is the primary aggregation carrier can be directly used as the carrier resources serving the UT being served.

Preferably, in the carrier aggregation method above, step S201 specifically comprises: determining the bandwidth capabilities of all the UTs that needed to be supported; determining the bandwidth size and bandwidth amount needed to be backwards compatible according to the bandwidth capabilities of all the UTs that needed to be supported; selecting carrier resources which are entirely backwards compatible with the bandwidth capabilities of all the UTs that needed to be supported according to the bandwidth size and bandwidth amount to form the primary aggregation carrier.

This embodiment firstly determines the bandwidth capabilities of all the UTs that needed to be supported in the wireless communication network, wherein the bandwidth capabilities determines the bandwidth size and bandwidth amount that needed to be backwards compatible, and the bandwidth size and bandwidth amount needed to be backwards compatible are important parameters when forming the primary aggregation carrier; hereby, then a new basic carrier set, that is, the primary aggregation carrier, which has greater bandwidth capabilities and is backwards compatible with the existing bandwidth capability of the UT in the wireless communication network system is formed. The primary aggregation carrier can be used independently to support asymmetrical carrier aggregation, also can be aggregated with other carriers to form a new greater carrier for supporting a UT with a greater bandwidth capability.

Preferably, in the carrier aggregation method above, unified scheduling is performed for the primary aggregation carrier and other carrier resources. In this embodiment, the new carrier formed from the primary aggregation carrier will serve as a new basic carrier to be scheduled by the BS uniformly, so as to reduce the complexity of the BS resource scheduling.

Preferably, in the carrier aggregation method above, step S201 specifically comprises: determining the bandwidth capabilities of all the UTs that needed to be supported; grouping the bandwidth capabilities of all the UTs that needed to be supported; determining the bandwidth size and bandwidth amount needed to be backwards compatible in each group; selecting carrier resources which are entirely backwards compatible with the bandwidth capabilities of all the UTs that needed to be supported according to the bandwidth size and bandwidth amount to form the primary aggregation carrier of each group.

This embodiment groups the different bandwidth capabilities of the UTs in advance, selects different carrier resources to form a primary aggregation carrier set when selecting resources to form the primary aggregation carrier; wherein each subset in the set corresponds to a group of different bandwidth capabilities and is entirely backwards compatible with different bandwidth capability levels. In this way, the spectrum efficiency is further improved.

For example, when there are the following UT bandwidth capabilities, 3MHz, 5MHz, 10MHz, 20MHz, 50MHz, 100MHz, in a wireless communication network, the bandwidth capabilities are grouped into two subsets as follows: {3MHz, 5MHz, 10MHz } and {20MHz, 50MHz, 100MHz }; when forming the primary aggregation carriers correspondingly, each subset forms at least one primary aggregation carrier; in order to be backwards compatible with three kinds of carriers, the least common multiple, which is backwards compatible, of all the carries in each subset can be selected; for the first subset, the carrier of 30MHz can be selected as a primary aggregation carrier; for the second subset, the carrier of 100MHz can be selected as a primary aggregation carrier.

Preferably, in the carrier aggregation method above, step S201 further comprises: regrouping the bandwidth capabilities of all the UTs that needed to be supported according to the current state of the wireless communication network; determining the bandwidth size and bandwidth amount needed to be backwards compatible in each regrouped group; selecting carrier resources which are entirely backwards compatible with the bandwidth capabilities of all the UTs that needed to be supported according to the bandwidth size and bandwidth amount to form a primary aggregation carrier of each regrouped group.

In this embodiment, the resources of the primary aggregation carrier are selected dynamically; the BS can dynamically adjust the original grouped resources according to the current state of the wireless communication network, such as changes of the wireless communication network environment, service conditions of the wireless communication system and UT bandwidth capability distribution conditions. The primary and secondary aggregation carriers also can be located at different carrier frequencies; the location and size of the primary and secondary aggregation carriers can be adjusted correspondingly according to the requirement of the carrier aggregation. Compared with the condition of the static configuration, this embodiment can form new primary and secondary aggregation carriers capable of supporting greater bandwidth capabilities according to the changes of the wireless communication network environment, such that the primary and secondary aggregation carriers can be used more flexibly, thereby adapting to various requirements of new wireless communication network and guaranteeing the communication quality of the wireless communication network.

Preferably, in the carrier aggregation method above, unified scheduling is performed for the carrier resources of each group. In this embodiment, when the BS schedules carrier resources, unified scheduling is performed for all the subsets in the primary aggregation carrier, thereby reducing the complexity of the BS resource scheduling.

Preferably, in the carrier aggregation method above, separate scheduling is performed for the carrier resources of each group. In this embodiment, when the BS schedules the carrier resources, separate scheduling is performed for the subsets in the primary aggregation carrier such that the BS resource scheduling is more flexibly, thereby reducing the complexity of the BS resource scheduling.

Preferably, in the carrier aggregation method above, unified scheduling is performed for the secondary aggregation carrier of each group. In this embodiment, when the BS schedules the carrier resources, unified scheduling is performed for all the secondary aggregation carriers in a subset, thereby reducing the complexity of scheduling.

Preferably, in the carrier aggregation method above, the method of forming the secondary aggregation carrier according to the carrier resources other than the primary aggregation carrier specifically comprises: selecting carrier resources which are entirely backwards compatible with the bandwidth capabilities of the UT being served to form a secondary aggregation carrier.

In this embodiment, the BS selects the carrier resources other than the primary aggregation carrier to perform an aggregation for the UTs of different types in the wireless communication network, so as to form a secondary aggregation carrier which is not entirely backwards compatible with the bandwidth capabilities of all the UTs; that is, for the selection of a secondary aggregation carrier, it is not necessary to be entirely backwards compatible with the bandwidth capabilities of all the UTs, but be backwards compatible with the UT being served to meet the requirement. The secondary aggregation carrier can be used independently to support the bandwidth capability of a UT of specific type, also can be aggregated with the primary aggregation carrier to form a new greater carrier to support a UT with greater bandwidth capability.

### The third embodiment

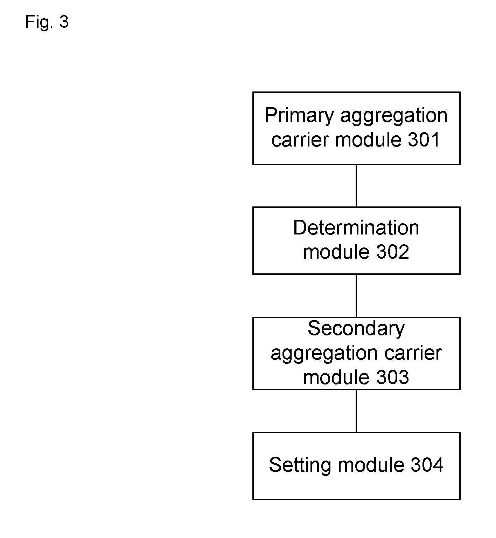

Fig. 3 is a structural diagram showing a carrier aggregation device according to the third embodiment of the disclosure, wherein the device comprises:
a primary aggregation carrier module 301, which is configured to form a primary aggregation carrier according to bandwidth capabilities of all UTs that needed to be supported in a wireless communication network;
a determination module 302, which is configured to determine whether the primary aggregation carrier meets bandwidth capability requirement of a UT being served;
a secondary aggregation carrier module 303, which is configured to form a secondary aggregation carrier according to carrier resources other than the primary aggregation carrier when the primary aggregation carrier does not meet the bandwidth capability requirement of the UT being served;
a setting module 304, which is configured to aggregate the primary aggregation carrier and the secondary aggregation carrier to obtain a new aggregation carrier, and setting the new aggregation carrier for meeting the bandwidth capability requirement of the UT being served.

In this embodiment, the BS firstly applies the primary aggregation carrier module 301 to form a primary aggregation carrier according to bandwidth capabilities of all UTs that needed to be supported in a wireless communication network; then applies the determination module 302 to determine whether the primary aggregation carrier meets a bandwidth capability requirement of a UT being served; then applies the secondary aggregation carrier module 303 to perform an aggregation for UTs of different types in the wireless communication network according to carrier resources other than the primary aggregation carrier to form an secondary aggregation carrier which is not entirely backwards compatible with the bandwidth capabilities of all the UTs when the primary aggregation carrier does not meet the bandwidth capability requirement of the UT being served, for example, the resources of the primary aggregation carrier which is utilized by the bandwidth capability of the UT being served has a low spectrum efficiency; and finally applies the setting module 304 to aggregate the primary aggregation carrier and the secondary aggregation carrier to generate a new aggregation carrier for supporting the UT with greater bandwidth capability. By the primary-secondary aggregation carrier mode, this embodiment effectively resolves the problems of high scheduling complexity and low scheduling flexibility of a BS which requires an entire backward compatibility for all the carrier resources when asymmetrical carrier aggregation is supported, so that the BS may schedule the carrier resources more flexibly, thereby reducing the scheduling complexity.

Preferably, the above carrier aggregation device further comprises: a grouping module, which is configured to group the bandwidth capabilities of all the UTs that needed to be supported.

This embodiment applies the grouping module to group the bandwidth capabilities of all the UTs that needed to be supported in advance. Different carrier resources are selected to form a primary carrier aggregation set when selecting resources to form a primary aggregation carrier, wherein each subset in the set corresponds to a group of different bandwidth capabilities and is entirely backwards compatible with different bandwidth capability levels. In this way, the spectrum efficiency is further improved.

From the description above, it can be seen that the embodiments described in the disclosure effectively resolve the problems of high scheduling complexity and low scheduling flexibility of a BS which requires an entire backward compatibility for all the carrier resources when the asymmetrical carrier aggregation is supported, so that the BS may schedule the carrier resources more flexibly, thereby reducing the scheduling complexity.

Obviously, those skilled in the art should understand that the modules and steps described above can be implemented by a common computing device; the modules or steps can be integrated on a single computing device or distributed on a network composed of a plurality of computing devices. Optionally, the modules or steps can be implemented by a programming code executable by a computing device, so that they can be stored in a storage device to execute by a computing device, or be realized by manufactured into an individual integrated circuit module respectively, or by applied several of them to be incorporated into a single integrated circuit module. In this way, the disclosure is not limited to any combination of specific hardware and software.

The above description is only preferred embodiments of the disclosure and not intended to limit the disclosure. For those skilled in the art, various modifications and changes can be made to the disclosure. Any modification, equivalent substitution and improvement within the spirit and principle of the disclosure are deemed to be within the scope of the disclosure.

## Claims

1. A carrier aggregation method for a Long Term Evolution (LTE) system, comprising:
forming a primary aggregation carrier according to bandwidth capabilities of all User Terminals (UTs) that needed to be supported in a wireless communication network;
determining whether the primary aggregation carrier meets a bandwidth capability requirement of a UT being served;
forming a secondary aggregation carrier according to carrier resources other than the primary aggregation carrier when the primary aggregation carrier does not meet the bandwidth capability requirement of the UT being served;
aggregating the primary aggregation carrier and the secondary aggregation carrier to obtain a new aggregation carrier, and setting the new aggregation carrier for meeting the bandwidth capability requirement of the UT being served.

2. The carrier aggregation method according to claim 1, further comprising:
setting the primary aggregation carrier for meeting the bandwidth capability requirement of the UT being served when the primary aggregation carrier meets the bandwidth capability requirement of the UT being served.

3. The carrier aggregation method according to claim 1, wherein forming the primary aggregation carrier according to the bandwidth capabilities of all the UTs that needed to be supported in the wireless communication network, specifically comprises:
determining the bandwidth capabilities of all the UTs that needed to be supported;
determining a bandwidth size and a bandwidth amount needed to be backwards compatible according to the bandwidth capabilities of all the UTs that needed to be supported;
selecting carrier resources which are entirely backwards compatible with the bandwidth capabilities of all the UTs that needed to be supported according to the bandwidth size and bandwidth amount, and forming the primary aggregation carrier.

4. The carrier aggregation method according to claim 1 or 3, further comprising:
performing unified scheduling for the primary aggregation carrier and other carrier resources.

5. The carrier aggregation method according to claim 1, wherein forming the primary aggregation carrier according to the bandwidth capabilities of all the UTs that needed to be supported in the wireless communication network, specifically comprises:
determining the bandwidth capabilities of all the UTs that needed to be supported;
grouping the bandwidth capabilities of all the UTs that needed to be supported;
determining a bandwidth size and a bandwidth amount needed to be backwards compatible in each group;
selecting carrier resources which are entirely backwards compatible with the bandwidth capabilities of all the UTs that needed to be supported according to the bandwidth size and bandwidth amount, and forming the primary aggregation carrier of the each group.

6. The carrier aggregation method according to claim 5, wherein forming the primary aggregation carrier according to the bandwidth capabilities of all the UTs that needed to be supported in the wireless communication network, further comprises:
regrouping the bandwidth capabilities of all the UTs that needed to be supported according to current state of the wireless communication network;
determining a bandwidth size and a bandwidth amount needed to be backwards compatible in each regrouped group;
selecting carrier resources which are entirely backwards compatible with the bandwidth capabilities of all the UTs that needed to be supported according to the bandwidth size and bandwidth amount, and forming a primary aggregation carrier of the each regrouped group.

7. The carrier aggregation method according to claim 5 or 6, wherein unified scheduling is performed for the carrier resources of each group.

8. The carrier aggregation method according to claim 5 or 6, wherein separate scheduling is performed for the carrier resources of each group.

9. The carrier aggregation method according to claim 5 or 6, wherein unified scheduling is performed for the secondary aggregation carrier of each group.

10. The carrier aggregation method according to claim 1, wherein forming the secondary aggregation carrier according to the carrier resources other than the primary aggregation carrier, specifically comprises:
selecting carrier resources which are entirely backwards compatible with a bandwidth capability of a UT being served, and forming the secondary aggregation carrier.

11. A carrier aggregation device for a LTE system, comprising:
a primary aggregation carrier module, which is configured to form a primary aggregation carrier according to bandwidth capabilities of all UTs that needed to be supported in a wireless communication network;
a determination module, which is configured to determine whether the primary aggregation carrier meets a bandwidth capability requirement of a UT being served;
a secondary aggregation carrier module, which is configured to form a secondary aggregation carrier according to carrier resources other than the primary aggregation carrier when the primary aggregation carrier does not meet the bandwidth capability requirement of the UT being served;
a setting module, which is configured to aggregate the primary aggregation carrier and the secondary aggregation carrier to obtain a new aggregation carrier, and set the new aggregation carrier for meeting the bandwidth capability requirement of the UT being served.

12. The carrier aggregation device according to claim 11, further comprising:
a grouping module, which is configured to group the bandwidth capabilities of all the UTs that needed to be supported.
